Europäisches Patentamt

European Patent Office

Office européen des brevets

(19)

(11) Veröffentlichungsnummer : **0 163 213**
**B1**

(12) **EUROPÄISCHE PATENTSCHRIFT**

(45) Veröffentlichungstag der Patentschrift :
05.04.89

(21) Anmeldenummer : 85106058.2

(22) Anmeldetag : 17.05.85

(51) Int. Cl.⁴ : **G 01 L  5/12**

(54) **Schubmesseinrichtung.**

(30) Priorität : 01.06.84 DE 3420437
22.09.84 DE 3434951

(43) Veröffentlichungstag der Anmeldung :
04.12.85 Patentblatt 85/49

(45) Bekanntmachung des Hinweises auf die Patenterteilung : 05.04.89 Patentblatt 89/14

(84) Benannte Vertragsstaaten :
**GB IT SE**

(56) Entgegenhaltungen :
DE--A-- 2 648 192
PATENTS ABSTRACTS OF JAPAN, Band 7, Nr. 188 (P-
217)[1333], 17. August 1983; & JP-A-58 88 632
Fachbuch "Technische Diagnostik an Schiffsmachinenanlagen", E. Moeck, H. Strickert, VEB Verlag
Technik, Berlin (DD), 1982, Seiten 83 bis 87

(73) Patentinhaber : **Licentia Patent-Verwaltungs-GmbH**
**Theodor-Stern-Kai 1**
**D-6000 Frankfurt/Main 70 (DE)**

(72) Erfinder : **Kranert, Klaus, Dr.-Ing.**
**Wittenbergener Weg 9**
**D-2000 Hamburg 56 (DE)**
Erfinder : **Helwich, Peter-Jürgen, Ing. grad.**
**Buchwaldstrasse 61**
**D-2000 Hamburg 61 (DE)**

(74) Vertreter : **Lertes, Kurt, Dr. et al**
**Licentia Patent-Verwaltungs-GmbH Theodor-Stern-**
**Kai 1**
**D-6000 Frankfurt/M 70 (DE)**

## Beschreibung

Die Erfindung betrifft eine Schubmeßeinrichtung nach dem Oberbegriff des Anspruchs 1.

Es ist eine Schubmeßeinrichtung bekannt geworden (E. Moeck, H. Strichert : Technische Diagnostik an Schiffsmaschinenanlagen, VEB Verlag Technik, Berlin (1982), S. 83.87, insbesondere bild 2.75 und 2.76 mit Text), bei der Dehnungsmeßstreifen auf einen Zwischenträger aufgeklebt sind. Der Zwischenträger bildet mit den Dehnungsmeßstreifen einen angesetzten Schubmeßfühler mit Schwachstelle, der auf eine zu vermessende Welle kraftschlüssig mittels spezieller Spannvorrichtungen aufgesetzt wird.

Es ist Aufgabe der Erfindung, eine Schubmeßeinrichtung zu schaffen, die genaue und dynamische Messungen gewährleistet und schubmäßig gering belastet wird.

Diese Aufgabe wird durch die im Kennzeichen des Anspruchs 1 angegebenen Merkmale gelöst. Weiterbildungen sind in den abhängigen Ansprüchen gekennzeichnet.

Mit der Einrichtung nach der Erfindung können bei Probefahrtmessungen genaue schiffstechnische Werte ermittelt und auf diesem Wege eine Brennstoffoptimierungs-Anlage für den Schiffsbetrieb geschaffen werden. Hierbei kann laufend der Propulsionswirkungsgrad des Propellers berechnet und bei Verstellpropellern die Relation zwischen Drehzahl n und H/D verändert werden. Sie erlaubt schließlich die Wartungsintervalle von Schiffsrumpf und Propeller ausreichend sicher zu bestimmen.

In der Zeichnung sind Ausführungsbeispiele nach der Erfindung schematisch dargestellt.

Es zeigt :

Fig. 1 einen prinzipiellen Aufbau der Meßeinrichtung, und

Fig. 2 eine kalibrierbare Meßwelle für Fest- oder Verstellpropellerschiffe

Um die Problematik der Schubmessung zu verdeutlichen, soll ein Rechenbeispiel für eine Wellendimensionierung folgen.

Es seien

$P_{eff}$ = 1910 PS (effektive Wellenleistung) ($\hat{=}$ 1400 kW)
$V_a$ = 14 km  (Propellereintrittsgeschwindigkeit)
w   = 0.25   (Nachstromziffer)
t   = 0.22   (Sogziffer)
$n_D$ = 0.7    (Propellerwirkungsgrad)

Aus

$$T = \frac{P_{eff} \cdot n_D (1 - w)}{V_a (1 - t)}$$

ergibt sich der Schub T = 13.4 Mp

Nach Klassifikations-Vorschriften ist eine Welle zu dimensionierem mit

$$D = 100 \sqrt[3]{\frac{P_{eff}}{n}} \cdot 1.15$$

D = 232 mm bei einer Drehzahl n = 230 1/min

Damit läßt sich eine relative Dehnung (Quetschung) $\varepsilon$ ermitteln mit :

$$\varepsilon = \frac{\sigma}{E} = \frac{p}{F \cdot E}$$

$$\varepsilon = 15 \cdot 10^{-6} \frac{m}{m}$$

worin

$\sigma$ = die Zugspannung
E = den Elastizitätsmodul
P = die Kraft und
F = die Fläche bedeuten

Eine elektronische Messung ist mit Dehnungsstreifen möglich. Das Problem liegt darin, daß die erwartete Stauchung der Welle für Nennschub $\varepsilon_N \approx 15 \cdot 10^{-6}$ ungefähr in derselben Größenordnung wie die Längendehnung durch die Temperatur pro °C liegt ($\alpha = 11 \cdot 10^{-6 m/m} \cdot °C^{-1}$). Außerdem ist der Elastizitäts- und Gleitmodul temperaturabhängig.

Die Verstärkungsfaktoren (Steilheiten) der einzelnen Dehnungsmeßstreifen und ihre Linearität kann z. B. mit 1 % Fehlerabweichungen angenommen werden.

Veränderliche Raumtemperaturen im Wellentunnel (Polargebiet resp. Tropen) aber auch Wärmeleitung von den Reibungsverlusten in den Traglagern können zu Temperaturunterschieden von z. B. 20 °C an der Schubmeßstelle führen.

Die Dehnungsmessung ist eine Differenzmessung von aktiven und passiven (« dummy »)-Streifen in der Wheatstone'schen Brücke. Dummy and aktive Streifen haben 1 % Fehler gegeneinander. Der Nullabgleich sei bei 15 °C gescheben. Die Messung finde bei 35 °C statt :

$$\varepsilon = 1,01 \; (\alpha \cdot 20° + \varepsilon_N) - 1,00 \; (\alpha \cdot 20°)$$

$$\varepsilon = \varepsilon_N + 0.2\alpha$$

Da $\varepsilon_N \approx \alpha$ ist, ergibt sich durch den Temperatureinfluß ein Fehler von $\Delta\varepsilon = + 20 \% \; \varepsilon_N$. Dieser Fehler kann reduziert werden, wenn $\varepsilon_N$ auf der Meßwelle erhöht und der Temperatureinfluß der Wärmedehnung reduziert wird.

An eine verwendbare Meßeinrichtung müssen daher folgende Forderungen gestellt werden :

— höhere Dehnung zur Messung bei Nennschub
— vernachlässigbarer Temperatureinfluß
— leichte Eichbarkeit — auch für Drehmomente
— geringe Kosten

Mit einer Meß-Hohlwelle mit vergrößertem Wellendurchmesser, die bei gleicher zulässiger Drehmomenten-Belastbarkeit (polares Widerstandsmoment $\sim r^3$) eine kleinere Querschnittsfläche ($\sim r^2$) hat, steigt die Stauchung $\varepsilon_N$ an.

Bei Verdoppelung des Querschnitts, z. B. auf D = 460 mm, ergibt eine Hohlwelle mit einem Innendurchmesser von 439 mm eine Dehnung (Quetschung) bei Nennschub von $\varepsilon' = 42 \cdot 10^{-6}$. Der obengenannte Fehler von 20 % $\varepsilon_N$ wird damit reduziert auf $\Delta\varepsilon = 20 \cdot 15/42 = 7,1 \%$.

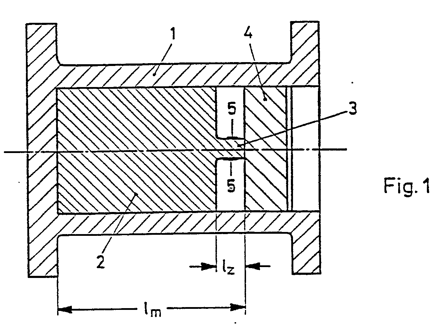

Erfindungsgemäß wird eine weitere mechanische Meßverstärkung des Schubes und damit ein größerer Störabstand zum Scheinschub durch Temperaturdehnung erreicht, wenn in den Wellenstrang einer Propellerwelle eine einseitig geschlossene Hohlwelle 1 mit einer nahezu schubsteifen zweiten Welle 2 mit einem Zapfen 3 eingesetzt wird, wie Fig. 1 zeigt. Durch einen Gewindedeckel 4 wird der Zapfen 3 sind Dehnungsmeßstreifen 5 aufgebracht. Die Gesamtlänge der schubsteifen Welle 2 ist mit $L_m$ und die Länge des Zapfens 3 ist mit $L_z$ angegeben. Nahezu die gesamte absolute Stauchung der Hohlwelle 1 erfolgt jetzt im Zapfen 3 zu einem $\varepsilon_N \leqslant 2 ‰$, je nach Auslegung.

Durch Leitpaste wird erreicht, daß eine nahezu gleichförmige Temperaturverteilung in der Hohlwelle 1 und in der Welle 2 erfolgt.

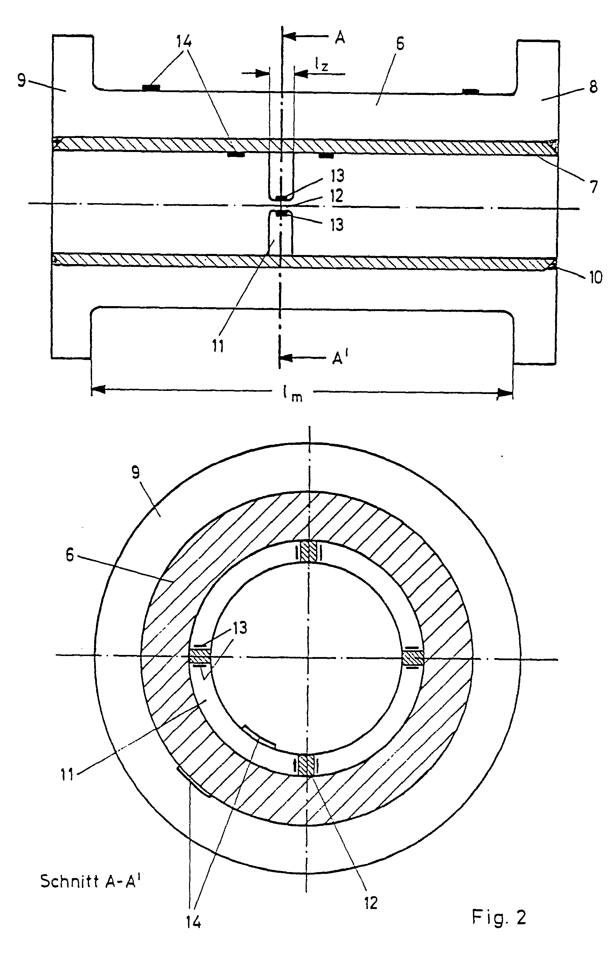

Eine Weiterbildung der Erfindung stellt die Meßwelle nach Fig. 2 dar, die hohl und daher auch für Verstellpropellerwellen geeignet ist. In die Hauptwelle 6, die für das Propellerdrehmoment ausgelegt sein muß, wird eine Hülse 7 als Meßwelle aus gleichem Stahl verwendet und mit einer Spielpassung eingesetzt und an beiden Enden z. B. mit den Flanschen 8, 9 bis 10 verschweißt. Die Hülse 7 weist in ihrer Mitte eine radiale Unterbrechungen 11 auf, wobei der rechte und linke Hülsenteil über Stege 12 verbunden bleiben. Die Stege 12 mit kleinen Abmessungen im Vergleich zur gesamten Hülsenlänge sind Träger von Dehnungsmeßstreifen 13. Auf die Innenfläche der Hülse 7 und die Außenfläche der Propellerwelle 6 sind Kompensationsmeßstreifen 14 aufgebracht zur Temperaturkompensation innerhalb einer Wheatstone'schen Brücke. Die zusätzliche mechanische Meßverstärkung ergibt sich annähernd aus dem Verhältnis der Länge der Welle 6 zur Länge der Stege 12.

Der Temperatureinfluß wird minimiert, indem zwischen Welle und Hülse eine Wärmeleitpaste vorgesehen wird.

Die beschriebenen Meßwellen nach Fig. 1 und 2 haben den Vorzug, daß sie im Werk vor dem Einbau kalibriert werden können. Eine Präzisionsmessung hinsichtlich verminderter Wärmeeinwirkung wird jeweils erreicht, wenn die Teile der Meßeinrichtung aus Stahl mit geringem Wärmeausdehnungskoeffizient und geringerem Elastizitätsmodul, z. B. Invarstahl, bestehen.

Die bestehenden Meßwellen erlauben die gleichzeitige Messung des Drehmomentes durch Aufkleben von Dehnungsmeßstreifen auf die äußere Welle sowie eine Drehzahlmessung, indem ein Flansch als Zahnkreuz ausgebildet wird, deren Zähne gezählt werden können. Alle Bauarten der Meßwellen sind eineichbar. Ihre Herstellungskosten sind gering.


**Patentansprüche**

1. Schubmeßeinrichtung für Schiffe mit Fest- oder Verstellpropeller, die in den Wellenstrang eingebaut ist, wobei ein für die Übertragung des Propellerdrehmomentes ausgelegtes Teilstück (1, 6) des Wellenstranges als Träger einer Meßwelle (2, 3, 7) definierter Meßlänge ($L_m$) dient, wobei die Meßwelle (2, 3, 7) aus einem Werkstoff mit annähernd gleichem Wärmeausdehnungskoeffizienten wie das Wellenteilstück (1,6) mit einer Spielpassung in das Teilstück eingebracht und am Anfang und Ende der Meßlänge mit dem Wellenteilstück verbunden ist, wobei die Meßwelle (2, 3, 7) aus einem längeren schubsteifen Teil (2) und einem kleineren, durch Querschnittreduzierung schubelastischen Teil (3, 12) — den Meßstegen — besteht, und wobei sich aus dem Verhältnis von Meßlänge ($L_m$) zu Steglänge ($L_z$) die Größe der mechanischen Meßverstärkung ergibt.

2. Schubmeßeinrichtung nach Anspruch 1, dadurch gekennzeichnet, daß eine Hohlwelle (1) mit der definierten Meßlänge ($L_m$) auf einer Seite geschlossen ist und eine schubsteife innere Meßwelle (2) mit einem Meßzapfen (3) aufnimmt, der von der anderen Seite mit einer Schraubplatte (4) vorgespannt ist, und daß der Meßzapfen (3) Dehnungsmeßstreifen (5) trägt.

3. Schubmeßeinrichtung nach Anspruch 1, dadurch gekennzeichnet, daß ein hohles Propellerwellenstück (6) eine hohle Meßwelle (7) aufnimmt, die an ihren Enden fest mit dem Propellerwellenstück (6) verbunden ist, und die etwa in ihrer Mitte einzelne Verbindungsstege (12) begrenzter Länge und Breite zur Aufnahme von Dehmungsmeßstreifen (13) aufweist.

4. Schubmeßeinrichtung nach Anspruch 3, dadurch gekennzeichnet, daß die Enden der beiden Wellenstücke (6, 7) miteinander verscheißt sind (10).

5. Schubmeßreinrichtung nach Anspruch 2 oder 3, dadurch gekennzeichnet, daß zur gleichmäßigen Temperaturverteilung zwischen Propeller- und Meßwelle eine Leitpaste eingebracht ist.

6. Schubmeßeinrichtung nach Anspruch 3, dadurch gekennzeichnet, daß Kompensationsmeßstreifen (14) auf der Außenfläche der Propellerwelle (6) und auf der Innenfläche der Meßwelle (7) angeordnet sind.

7. Schubmeßeinrichtung nach den Ansprüchen 1, 2 oder 3, dadurch gekennzeichnet, daß das Teilstück des Wellenstranges (1, 6) und die Meßwelle (2, 7) aus einem Stahl mit geringem Wärmeausdehnungskoeffizienten und geringem Elastizitätsmodul (z. B. Invarstahl) bestehen.

**Claims**

1. Thrust-measuring equipment for ships with fixed or variable-pitch propeller, which is built into the shafting, wherein a partial member (1, 6) of the shafting is designed for the transmission of the propeller torque and serves as carrier of a measuring shaft (2, 3, 7) of defined measuring length ($L_m$), wherein the measuring shaft (2, 3, 7) of a material of nearly the same thermal co-efficient of expansion as the partial shaft member (1, 6) is introduced with a clearance fit into the partial member and connected with the partial shaft member at the beginning and end of the measurement length, wherein the measuring shaft (2, 3, 7) consists of a longer shear-resistant part (2) and a shorter part (3, 12), which is elastic in shear due to reduction in cross-section — the measuring bars —, and wherein the magnitude of the mechanical measurement amplification results from the ratio of measuring length ($L_m$) to bar length ($L_z$).

2. Thrust-measuring equipment according to claim 1, characterised thereby, that a hollow shaft (1) of the defined measuring length ($L_m$) is closed at one end and receives a shear-resistant inner measuring shaft (2) with a measuring spigot (3), which is biassed by a screw plate (4) from the other end, and that the measuring spigot (3) carries strain gauges (5).

3. Thrust-measuring equipment according to claim 1, characterised thereby, that a hollow propeller shaft member (6) receives a hollow measuring shaft (7), which is firmly connected at its ends with the propeller shaft member (6) and which in about its middle displays individual connecting webs (12) of limited length and width for the reception of strain gauges (13).

4. Thrust-measuring equipment according to claim 3, characterised thereby, that the ends of both the shaft members (6, 7) are welded together (10).

5. Thrust-measuring equipment according to claim 2 or 3, characterised thereby, that a conductive paste is introduced between propeller shaft and measuring shaft for uniform temperature distribution.

6. Thrust-measuring equipment according to claim 3, characterised thereby, that compensating strain gauges (14) are arranged on the outward surface of the propeller shaft (6) and the inward surface of the measuring shaft (7).

7. Thrust-measuring equipment according to the claims 1, 2 or 3, characterised thereby, that the partial member (1, 6) of the shafting and the measuring shaft (2, 7) consists of a steel of low thermal co-efficient of expansion and low modulus of elasticity (for example INVAR steel).

**Revendications**

1. Appareil de mesure de la poussée pour navires à hélices à pas fixe ou réglable, monté dans la ligne d'arbre, une pièce partielle (1, 6) du tronçon d'arbre, déterminée pour la transmission du couple de rotation d'hélice, servant de support à un arbre de mesure (2, 3, 7) de longueur de mesure (Lm) définie, l'arbre de mesure (2, 3, 7) étant composé d'un matériau de coefficient de dilatation thermique approximativement égal à celui de la pièce partielle d'arbre (1, 6), logé dans la pièce partielle avec un ajustement à jeu et relié à la pièce partielle d'arbre au début et à l'extrémité de la longueur de mesure, l'arbre de mesure (2, 3, 7) se composant d'une partie (2) plus longue, rigide sous la poussée, et d'une partie (3, 12) plus petite, la nervure de mesure, rendue élastique sous la poussée par une réduction de la section transversale, l'importance de l'amplification de mesure mécanique résultant du rapport de la longueur de mesure (Lm) par rapport à la longueur de nervure (Lz).

2. Appareil de mesure de la poussée selon la revendication 1, caractérisé en ce qu'un arbre creux (1) de longueur de mesure (Lm) définie est obturé d'un côté et loge un arbre de mesure (2) intérieur, rigide sous la poussée, comprenant un tourillon (3) précontraint de l'autre côté par une plaque vissée (4), et en ce que le tourillon de mesure (3) porte des jauges de mesure de dilatation (5).

3. Appareil de mesure de la poussée selon la revendication 1, caractérisé en ce qu'une pièce d'arbre d'hélice creuse (6) loge un arbre de mesure (7) creux, rigidement relié à ses extrémités à la pièce d'arbre d'hélice (6) et présentant approximativement à son centre des nervures de liaison (12) individuelles de longueur et de largeur limitées pour recevoir des jauges de mesure de dilatation (13).

4. Appareil de mesure de la poussée selon la revendication 3, caractérisé en ce que les extrémités des deux pièces d'arbres (6, 7) sont soudées ensemble (10).

5. Appareil de mesure de la poussée selon la revendication 2 ou 3, caractérisé en ce qu'une pâte conductrice est introduite entre l'arbre d'hélice et l'arbre de mesure pour obtenir une répartition régulière de la température.

6. Appareil de mesure de la poussée selon la revendication 3, caractérisé en ce que des jauges de compensation (14) sont disposées sur la surface extérieure de l'arbre d'hélice (6) et sur la surface intérieure de l'arbre de mesure (7).

7. Appareil de mesure de la poussée selon les revendications 1, 2 et 3, caractérisé en ce que la pièce partielle du tronçon d'arbre (1, 6) et l'arbre de mesure (2, 7) sont composés d'un acier à faible coefficient de dilatation thermique et à faible module d'élasticité (par exemple en acier Invar).

Fig. 1

Schnitt A-A'

Fig. 2